# EUROPÄISCHE PATENTSCHRIFT

(11) **EP 2 826 380 B1**
(45) Veröffentlichungstag und Bekanntmachung des Hinweises auf die Patenterteilung: **30.11.2016**
(21) Anmeldenummer: 13176456.5
(22) Anmeldetag: 15.07.2013
(51) Int. Cl.: A23C 9/15, A23C 9/152, A23C 15/12

(54) **Streichfähige Zubereitungen mit Kräutern**
Spreadable compositions comprising herbs
Compositions oncteux avec herbes

(43) Veröffentlichungstag der Anmeldung: 21.01.2015
(73) Patentinhaber: DMK Deutsches Milchkontor GmbH, 27404 Zeven (DE)
(72) Erfinder: Schomacker, Marina, 27419 Sittensen (DE); Hahn, Michael, 27404 Heerlingen (DE)
(74) Vertreter: Fabry, Bernd

(56) Entgegenhaltungen:
- DE-A1- 19 700 483
- DE-U1-202006 010 784
- DE-U1-202011 102 569

## Beschreibung

### Gebiet der Erfindung

Die Erfindung befindet sich auf dem Gebiet der Nahrungsmittel und betrifft eine bei Raumtemperatur streichfähige Zubereitung mit Kräutern, insbesondere eine so genannte "Kräuterbutter".

### Stand der Technik

Die EU-Streichfettverordnung und die deutsche Butterverordnung definieren den Begriff Butter und ihre verschiedenen Sorten sehr genau. Demnach handelt es sich um ein Streichfett, das bei 20°C festbleibend und streichfähig ist, in Form einer festen, elastischen Emulsion, überwiegend vom W/O-Typ, das ausschließlich aus Milch und/oder bestimmten Milcherzeugnissen mit Fett als wesentlichem Bestandteil besteht. Andere zur Herstellung notwendige Stoffe dürfen zugesetzt werden, sofern diese Stoffe nicht dazu bestimmt sind, einen Milchbestandteil ganz oder teilweise zu ersetzen. Butter hat einen Fettgehalt von mindestens 80 und höchstens 90 Gew.-%, einen Höchstgehalt an Wasser von 16 Gew.-% sowie einen Höchstgehalt an fettfreier Milchtrockenmasse von 2 Gew.-%. Charakteristisch ist der hohe Gehalt des Fettes an gesättigten Fettsäuren (durchschnittlich 69 Gew.-%) und der niedrige Gehalt an mehrfach ungesättigten Fettsäuren (durchschnittlich 3 Gew.-%). Für zusammengesetzte Erzeugnisse mit einem Milchfettgehalt von mindestens 62 Gew.-% kann die Produktbezeichnung "Butterzubereitung" verwendet werden.

Dahingegen sind Mischstreichfette Erzeugnisse in Form einer festen, plastischen Emulsion, die aus festen und/oder flüssigen pflanzlichen und/oder tierischen Erzeugnissen gewonnen wurden, und einen Milchfettanteil von 10 bis 80 Gew.-% des Gesamtfettgehalts aufweisen.

In der vorliegenden Erfindung wird zusammenfassend für alle Erzeugnisse, die Butter enthalten unabhängig von ihrem Fettgehalt und dem Anteil an Milchfett der Begriff "mit Butter" oder "Buttermischfett" verwendet.

Butter ist ein reines und natürliches Lebensmittel, das nicht nur wegen seines guten Geschmacks sondern auch wegen der enthaltenen Nährstoffe in der Ernährung verwendet wird. Aufgrund der enthaltenen fettlöslichen Vitamine A, D, E und beta-Carotin ist Butter ein bedeutender Vitaminspeicher und liefert darüber hinaus Mineralstoffe wie beispielsweise Calcium. Butter enthält zudem leicht verdauliches Milchfett. Bei Kühlschranktemperatur ist Butter allerdings fest. Sie lässt sich daher direkt nach dem Entnehmen aus dem Kühlschrank nur schwer verarbeiten.

Herkömmliche Kräuterbutter ist eine Mischung, die im Wesentlichen aus Butter und Kräutern besteht. Sie wird häufig zum Verfeinern von Suppen, Soßen, Gemüse, als Garnierung und Beilage zu Fleisch und Fischgerichten verwendet. Kräuterbutter wird nicht nur in der Küche, sondern auch im Freien, z.B. beim Grillen im Garten oder bei Picknicks verwendet. Kräuterbutter ist oft über längere Zeit in Gebrauch, da sie im Vergleich zu reiner Butter nur gelegentlich und in kleineren Mengen verwendet wird.

Ein Nachteil der Kräuterbutter ist jedoch, dass sie ebenso wie reine Butter in kaltem Zustand fest und nur schwer zu verarbeiten ist. Gerade bei Kräuterzubereitungen ist es jedoch von Vorteil, wenn das Produkt weicher ist und auch in kaltem Zustand leicht verarbeitet werden kann. Vor allem bei der Verwendung im Freien sollte eine Kräuterzubereitung mit Butter sich einfach und sauber portionieren lassen.

Nun sind solche Zubereitungen durchaus aus dem Stand der Technik bekannt.

Aus dem deutschen Gebrauchsmuster DE 20 2006 011 600 U1 (Meggle) ist eine Kräuterzubereitung mit Butter bekannt, die 10 bis 70 Gew.-% Butter und 20 bis 80 Gew.-% fettarme Bestandteile, z.B. Buttermilch, Milch mit reduziertem Fettgehalt, Joghurt und/ oder Wasser, Kräuter und Konservierungsmittel umfasst.

Gegenstand des deutschen Gebrauchsmusters DE 20 2011 102 569 U1 (Meggle) sind Kräuterzubereitungen mit Butter, welche (i) eine Fettkomponente enthaltend Butter und Pflanzenöl und (ii) Geschmackszutaten umfassend Kräuter und/oder Gemüse aufweisen und sich dadurch auszeichnen, dass der Gesamtfettgehalt bei 20 bis 60 Gew.-% liegt und das Verhältnis des Gesamtfettgehalts zum Gesamtgehalt an Kräutern und/oder Gemüsen von 2,5:1 bis 1: 2,5 beträgt.

In dem deutschen Gebrauchsmuster DE 20 2006 010 784 U1 (Meggle) wird beispielsweise eine Kräuterzubereitung mit Butter beansprucht, die sich dadurch auszeichnet, dass die Zusammensetzung 10 bis 70 Gew.-% Butter und 5 bis 40 Gew.-% Kräuterpaste mit einem Wassergehalt von 80 bis 75 Gew.-% umfasst sowie (a) niedrig schmelzende Butterfraktionen und oder (b1) 1 bis 10 Gew.-% hoch schmelzende Pflanzenfette ausgewählt aus Palmöl und Kokosnuss und (b2) 0 bis 50 Gew.-% niedrig schmelzende Pflanzenfette ausgewählt aus Rapsöl, Sonnenblumenöl, Maiskeimöl und Olivenöl.

Das Dokument DE 197 00 483 A1 (Frede) offenbart eine Würzbutterzubereitung mit würzigkräftiger Geschmackskomponente, welche die Inhaltsstoffe Butter, Schnittlauch, Petersilie, Garten-Kresse, Salz und als besondere Geschmackskomponente Curry umfasst. Die Zugabe der an sich einheimischen Inhaltsstoffe Schnittlauch, Petersilie und Salz sorgt bereits für eine würzige Geschmacksrichtung der Butter. Durch die weitere Beimischung einheimischer Garten-Kresse erhält die Butterzubereitung ein leicht säuerlich-scharfes Geschmacksaroma. Eine besondere Geschmacksnuancierung wird durch die Zugabe der Curry-Komponente erreicht. Dieses in einheimischen Gefielden in Verbindung mit Butter untypischen Gewürzes verleiht der Buttermischung ein fremdländisches, insbesondere asiatisches Geschmacksaroma. Durch die Kombination aus einheimischen und fremdländischen Inhaltsstoffen wird damit eine neue Würzbutterzubereitung mit appetitanregendem Geschmack und Geruch zur Verfügung gestellt, deren besondere Geschmacksrichtung sich aus der synergistischen Komposition der individuellen Inhaltsstoffe als Zugabeanteile zur Butter ergibt.

Diese Butterzubereitungen sind in der Tat auch in kaltem Zustand leicht zu verarbeiten, doch wird dieser rheologische Vorteil dadurch erzielt, dass der Butteranteil zu Gunsten von nicht weiter genannten Mengen an Milch, Joghurt, niedrig schmelzenden Butterfraktionen oder erheblichen Mengen an Pflanzenfetten vermindert wird. Auf diese Weise wird der typische Buttergeschmack durch eher synthetische Geschmacksnoten verfälscht oder zumindest in den Hintergrund gedrängt, was nur wieder durch eine verstärkte Zugabe von Gewürzen, Aromen und gegebenenfalls Salz ausgeglichen werden kann und von Konsumenten eher nachteilig beurteilt wird.

Es wäre daher wünschenswert, eine gebrauchsfertige Kräuterzubereitung mit Butter zur Verfügung zu haben, die auch bei Temperaturen zwischen ab 10 °C noch streichfertig ist, einen Butteranteil von mehr als 70, vorzugsweise mehr als 75 Gew.-% aufweist, Pflanzenfette oder Pflanzenöle nur in Mengen bis etwa 5 Gew.-% enthält und dabei selbstverständlich bei Raumtemperatur formstabil, hygienisch verpackt und leicht zu portionieren ist sowie nach dem Gebrauch wieder verschlossen werden kann.

Die Aufgabe der vorliegenden Erfindung hat darin bestanden, eine Butterzubereitung mit Kräutern zur Verfügung zu stellen, die das oben geschilderte komplexe Anforderungsprofil erfüllt.

### Beschreibung der Erfindung

Gegenstand der Erfindung eine streichfähige Zubereitung, enthaltend
(a) 72 bis 85 und vorzugsweise 75 bis 80 Gew.-% Butter oder eine synthetische Glyceridmischung mit gleichartigem Fettsäurespektrum,
(b) 2 bis 5 Gew.-% einer niedrig schmelzenden Butterfraktion, sowie
(c) 10 bis 26 Gew.-% einer Kräuterzubereitung,
mit der Maßgabe, dass sich die Mengenangaben zu 100 Gew.-% ergänzen. Überraschenderweise wurde gefunden, dass sich Butterzubereitungen mit Kräutern herstellen lassen, die bereits bei Temperaturen ab 10 °C - also Kühlschranktemperatur - problemlos verstreichen lassen und trotzdem einen Butteranteil von mehr als 70, vorzugsweise sogar von mehr als 75 Gew.-% aufweisen. Da sie ohne die Mitverwendung von pflanzlichen Triglyceriden auf Basis von Palm- oder Kokosöl auskommen, weisen sie einen unverfälschten Buttergeschmack aus, der keine Überdeckung durch andere Aromen benötigt. Schließlich besitzen die Zubereitungen umgekehrt bei Raumtemperatur eine ausreichende Formstabilität, d.h. sie zerlaufen nicht.

### Butter und niedrig schmelzende Butterfraktionen

Die Herstellung von Butter beruht auf der Abtrennung des Rahms von der Kuhmilch. Hauptbestandteil von Butter sind daher Milchfette, die sich vor allem aus Triglyceriden und Fettsäuren zusammensetzen. Die in der Butter vorkommenden Fettsäuren sind beispielsweise Buttersäure, Capronsäure, Caprylsäure, Caprinsäure, Laurinsäure, Myristinsäure, Myristolsäure, Pentadekansäure, Palmitinsäure, Palmitolsäure, Magerinsäure, Stearinsäure, Ölsäure, Elaidinsäure, Linolsäure und Linoleinsäure. Milchfett hat einen relativ hohen Gehalt an kurzkettigen gesättigten Fettsäuren und einen relativ geringen Gehalt an mehrfach ungesättigten Fettsäuren (z.B. Linolsäure, Linolensäure).

Die Schmelzpunkte der in Butter enthaltenen Milchfette liegen je nach Fettmolekül bei 4 bis zu 50 °C. Anhand der unterschiedlichen Schmelzpunkte ist es möglich, Butter physikalisch durch Fraktionierung zu trennen, d.h. einzelne Fraktionen mit speziellen physikalischen Eigenschaften zu separieren.

Beim Fraktionieren von Milchfett wird entwässerte Butter erhitzt und dann wieder auf die gewünschte Kristallisationstemperatur abgekühlt. Die hochschmelzenden Triglyceride kristallisieren zuerst aus, der niedrig-schmelzende Anteil bleibt flüssig. Bei einer im Stand der Technik eingesetzten zweistufigen Fraktionierung werden beispielsweise im ersten Schritt die Fraktionen "Stearin" (Klarschmelzpunkt 41 bis 48 °C) und "Olein" getrennt. In einer zweiten Stufe können die beiden Fraktionen nochmals fraktioniert werden. Aus "Stearin" kann dann ein "Hart-Stearin" mit einem Schmelzpunkt von 46 °C und ein "Weich-Stearin" mit einem Schmelzpunkt von 36 °C gewonnen werden. Das "Olein" kann in "Midfraction" mit einem Schmelzpunkt von 26 °C und "Superolein" mit einem Schmelzpunkt von 12 °C oder tiefer aufgetrennt werden. Beim Fraktionieren reichern sich in der höher schmelzenden Phase Triglyceride aus langkettigen gesättigten Fettsäuren an, in der niedrig-schmelzenden Phase mehr kurzkettige und ungesättigte Fettsäuren.

Es ist so möglich, den jeweiligen Anteil der verschiedenen Milchfette zu variieren, und dadurch die Eigenschaften eines Buttermischfetts zu verändern. Insbesondere der Schmelzpunkt eines Buttermischfetts kann durch Variation der Zusammensetzung der Milchfette reguliert werden. In der Zusammensetzung der vorliegenden Erfindung unterstützen fraktionierte Butterfette je nach Fraktion sowohl die Formbarkeit bei Kühlschranktemperaturen als auch die Formstabilität bei Raumtemperatur. Vorzugsweise weisen diese Butteröle eine Schmelztemperatur von 8 bis 12 °C auf.

Um eine Zubereitung bereitzustellen, die die gewünschte Formbarkeit bei Raumtemperatur aufweist, kann die Kräuterzubereitung mit Butter einen im Vergleich zu Butter höheren Anteil an Butterfraktionen mit niedrigem Schmelzpunkt enthalten. Der Anteil der zusätzlichen niedrig-schmelzenden Butterfraktionen kann nach Belieben so gewählt werden, dass die gewünschte Konsistenz der Kräuterzubereitung mit Butter erhalten wird. Die Auswahl der bestimmten Butterfraktionen und der Anteil, in dem sie in der erfindungsgemäßen Zusammensetzung enthalten sind, ist nicht begrenzt. Es liegt im Bereich des Wissens des Fachmanns, in Abhängigkeit von der Art der verwendeten Butterfraktionen und eventuellen weiteren in der Zusammensetzung enthaltenen Bestandteilen die Menge der eingesetzten Butterfraktionen so zu wählen, dass die gewünschte Konsistenz erhalten wird. So sind die niedrig-schmelzende Butterfraktionen in einer Menge von 2 bis 5 und vorzugsweise 2,5 bis 3,5 Gew.-% enthalten.

### Kräuterzubereitung

Durch eine Kombination von Kräutern und Butter mit niedrig schmelzenden Butterfraktionen, speziell Butterölen wird eine Kräuterzubereitung mit Butter erhalten, die auch direkt nach dem Entnehmen aus dem Kühlschrank streich- und schmierfähig ist und sich problemlos formen und verarbeiten lässt. Dabei bleibt die erfindungsgemäße Kräuterzubereitung mit Butter auch bei Raumtemperatur formstabil.

Die Art der Kräuter, die in der erfindungsgemäßen Zusammensetzung enthalten sind, ist nicht begrenzt. Es können beispielsweise Kräuter und Gewürze wie Bärlauch, Basilikum, Beifuß, Bohnenkraut, Borretsch, Brunnenkresse, Dill, Estragon, Kerbel, Kresse, Liebstöckel, Majoran, Melisse, Minze, Oregano, Paprika, Petersilie, Pfeffer, Pimpinelle, Rosmarin, Salbei, Sauerampfer, Schnittlauch, Thymian, Ysop, einzeln oder in beliebigen Kombinationen, enthalten sein. Die Kräuter können der Kräuterzubereitung mit Butter in beliebiger Form zugegeben werden. Sie können z.B. in gehackter, klein geschnittener Form, als Extrakt, in frischer Form oder in getrockneter, gefrorener oder wärmebehandelter Form enthalten sein.

In einer ersten Ausgestaltungsform enthalten die Zubereitungen die Komponente (c) in Form von fein gehackten frischen Kräutern. Alternativ kann auch eine wässrige Kräuterpaste eingesetzt werden, die vorzugsweise einen Wasseranteil von 50 bis 85 Gew.-% enthält.

Es hat sich als vorteilhaft erwiesen, eine vorgefertigte Kräuterpaste mit einem Wassergehalt von 60 bis 75 Gew.-% und einer Trockenmasse von 25 bis 40 Gew.-%, vorzugsweise beispielsweise 70 Gew.-% Wassergehalt und eine Trockenmasse von 30 Gew.-% einzusetzen. Die Kräuterpaste kann je nach Bedarf unterschiedliche frische, gefrorene oder getrocknete Kräuter und/oder Gewürze enthalten. In einer bevorzugten Ausführungsform enthält die Kräuterpaste unter anderem beispielsweise Kräuter, Salz, Gewürze, Knoblauch und Zwiebeln. Die Kräuterpaste wird in der butterhaltigen Kräuterzubereitung in einer Menge von vorzugsweise 15 bis 26, insbesondere 18 bis 20 Gew.-% eingesetzt.

### Pflanzenfette und Pflanzenöle

Wie oben erläutert, stellt die Mitverwendung von Pflanzenfetten oder Pflanzenölen kein Erfordernis für die erfindungsgemäßen Zubereitungen dar. Es kann jedoch in ausgewählten Fällen von Vorteil sein, geringe Mengen bis zu 5 Gew.-% bezogen auf die Zubereitung dieser Stoffe mitzuverwenden.

Pflanzenfette verleihen der butterhaltigen Kräuterzubereitung eine höhere Formstabilität bei Raumtemperatur. Sie dienen als Matrix für die Zusammensetzung. Geeignet sind hierfür insbesondere natürliche pflanzliche Fette wie z.B. gehärtetes Palmöl oder Kokosfett.

Umgekehrt begünstigen Pflanzenöle der Zusammensetzung eine noch niedrigere Viskosität und unterstützen die Formbarkeit bei Kühlschranktemperaturen. Beispiele hierfür sind Rapsöl, Sonnenblumenöl, Maiskeimöl und Olivenöl.

### Weitere Zusatzstoffe

Darüber hinaus kann die Kräuterzubereitung mit Butter je nach Bedarf weitere Zusätze enthalten. Beispiele für solche weiteren Bestandteile sind Buttermilch, synthetische oder natürliche Aromastoffe, vorzugsweise natürliche Aromastoffe, Salz, Gewürze, Knoblauch, Zwiebeln sowie Säuerungsmittel und Antioxidantien.

Durch die Verwendung von Buttermilch kann beispielsweise der Fettgehalt der erfindungsgemäßen Zusammensetzung reduziert werden und ein fettärmeres, kalorienreduziertes Produkt erhalten werden.
(A) **Aromastoffe.** Die erfindungsgemäßen Zubereitungen können einen oder mehrere Aromastoffe enthalten. Typische Beispiele umfassen: Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion^{®}), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.
(B) Säuerungsmittel und Antioxidantien. Auch diese Stoffe müssen innerhalb der EU der LebensmittelzulassungsVO genügen. Als Säuerungsmittel bzw. Antioxidantien kommen demnach in Betracht:
   - • E 300: Ascorbinsäure
   - • E 301: Natriumascorbat
   - • E 302: Calciumascorbat
   - • E 304: Ascorbylpalmitat/Ascorbylstearat
   - • E 306: Tocopherolhaltige Extrakte
   - • E 307: Alpha-Tocopherol
   - • E 308: Gamma-Tocopherol
   - • E 309: Delta-Tocopherol
   - • E 310: Propylgallat
   - • E 311: Octylgallat
   - • E 312: Dodecylgallat
   - • E 315: Isoascorbinsäure
   - • E 316: Natriumisoascorbat
   - • E 319: tert.-Butylhydrochinon
   - • E 320: Butylhydroxyanisol (BHA)
   - • E 321: Butylhydroxytoluol (BHT)
   - • E 322: Lecithin
   - • E 325: Natriumlactat
   - • E 326: Kaliumlactat
   - • E 327: Calciumlactat
   - • E 330: Zitronensäure
   - • E 331: Mono-/Di-/Trinatriumcitrat
   - • E 332: Monokaliumcitrat, trikaliumcitrat
   - • E 333: Monocalciumcitrat, Dicalciumcitrat, Tricalciumcitrat
   - • E 334: L-(+)-Weinsäure
   - • E 335: Mononatriumtartrat, Dinatriumtartrat
   - • E 336: Monokaliumtartrat, Dikaliumtartrat
   - • E 337: Kaliumnatriumtartrat
   - • E 338: Phosphorsäure
   - • E 339: Mononatriumphosphat, Dinatriumphosphat, Trinatriumphosphat
   - • E 340: Monokaliumphosphat, Dikaliumphosphat, Trikaliumphosphat
   - • E 341: Monocalciumphosphat, Dicalciumphosphat, Tricalciumphosphat
   - • E 343: Magnesiumphosphate
   - • E 350: Natriumhydrogenmalat, Natriummalat
   - • E 351: Kaliummalat
   - • E 352: Calciummalat, Calciumhydrogenmalat
   - • E 353: Metaweinsäure
   - • E 354: Calciumtartrat
   - • E 355: Adipinsäure
   - • E 356: Natriumadipat
   - • E 357: Kaliumadipat
   - • E 363: Bernsteinsäure
   - • E 380: Ammoniumcitrat
   - • E 385: Cacliumdinatriummethylendiamintetrahydrat
   - • E 392: Rosmarinextrakt

### Streichfähige Zubereitungen

In einer bevorzugten Ausführungsform können die streichfähigen Zubereitungen folgende Zusammensetzungen aufweisen:
(a) 72 bis 85 und vorzugsweise 75 bis 80 Gew.-% Butter oder eine synthetische Glyceridmischung mit gleichartigem Fettsäurespektrum,
(b) 2 bis 5 und vorzugsweise 2,5 bis 3,5 Gew.-% einer niedrig schmelzenden Butterfraktion,
(c) 10 bis 26 und vorzugsweise 15 bis 20 Gew.-% einer Kräuterzubereitung sowie gegebenenfalls
(d) 0 bis 5, vorzugsweise 0,5 bis 2 Gew.-% Pflanzenfette und/oder Pflanzenöle und
(e) 0 bis 2, vorzugsweise 0,1 bis 1,0 Gew.-% weitere Zusatzstoffe,
mit der Maßgabe, dass sich die Mengenangaben zu 100 Gew.-% ergänzen.

### Herstellverfahren

Ein weiterer Gegenstand der Erfindung betrifft ein Verfahren zur Herstellung der erfindungsgemäßen Zubereitungen, bei dem man die Komponenten (a) und (b) in einem Rotor-Statormischer verknetet und dabei allmählich die Komponente (c) hinzugibt.

### Gewerbliche Anwendbarkeit

Eine Kräuterzubereitung mit Butter nach vorliegender Erfindung kann in Dosierungsvorrichtungen wie beispielsweise in Tuben oder Spender oder insbesondere Bechern mit Wiederverschluss abgefüllt werden. Dadurch ist es möglich, die Kräuterzubereitung mit Butter auch bei gelegentlichem Bedarf in kleinen Mengen zu entnehmen und die Verpackung anschließend wieder hygienisch zu verschließen. Die Kräuterzubereitung mit Butter kommt nur im Bereich einer kleinen Kontaktfläche mit der Umgebung in Berührung während der Rest des Füllguts im Inneren der Dosierungsvorrichtung geschützt ist. Auch bei der Verwendung im Freien kann die Kräuterzubereitung mit Butter sauber in der benötigten Menge entnommen werden während das restliche Produkt im Inneren geschützt bleibt. Die erfindungsgemäße Kräuterzubereitung mit Butter kann darüber hinaus besonders gut zum Garnieren von Lebensmitteln verwendet werden. Da sie aufgrund ihrer besonderen Zusammensetzung bei Raumtemperatur noch formstabil bleibt, eignet sich die erfindungsgemäße Kräuterzubereitung mit Butter besonders gut auch zur Dekoration beispielsweise am Büffet, wo die Formstabilität bei Raumtemperatur von besonderer Wichtigkeit ist.

### Beispiele

### Beispiele 1 bis 7, Vergleichsbeispiele V1 bis V3

In der folgenden Tabelle 1 sind Formulierungsbeispiele für streichfähige Butterformulierungen mit Kräutern gegeben. Angegeben sind die Erstarrungspunkte, also die Temperaturen, ab denen die Zubereitungen nicht mehr streichfähig waren. Die Formstabilität bei 20 °C wurde auf einer Skala von (1) = formstabil bis (4) = zerfließend beurteilt. Die geschmackliche Beurteilung erfolgte durch ein Panel von 5 geschulten Testern. Beurteilt wurde der buttrige Geschmack der Zubereitungen auf einer Skala von (1) = ausgeprägt bis (6) = kaum wahrnehmbar.

Die Beispiele 1 bis 7 sind erfindungsgemäß; die Beispiele V1 bis V3 dienen zum Vergleich.

**Tabelle 1**

| Formulierungsbeispiele | | | | | | | | | | |
|---|---|---|---|---|---|---|---|---|---|---|
| **Komponente** | **1** | **2** | **3** | **4** | **5** | **6** | **7** | **V1** | **V2** | **V3** |
| Butter | 72 | 75 | 80 | 82 | 85 | 80 | 80 | 60 | 70 | 80 |
| Butteröl | 2 | 2 | 3 | 3 | 4 | 3 | 2 | 10 | 10 | - |
| Buttermilch | - | - | - | - | - | 1 | - | - | - | - |
| Kokosfett | - | - | - | - | - | - | 1 | - | 10 | - |
| Olivenöl | - | - | - | - | - | - | 1 | - | | 10 |
| Kräuterpaste* | Ad 100 | | | | | | | | | |
| Zitronensäure | 0,1 | | | | | | | | | |
| Benzoesäure | 0,1 | | | | | | | | | |
| Erstarrungspunkt [°C] | 10 | 10 | 9 | 7 | 7 | 8 | 9 | 15 | 10 | 10 |
| Formstabilität bei 20°C | 1,5 | 1,5 | 2,0 | 2,0 | 2,0 | 2,0 | 2,5 | 1,5 | 1,5 | 3,0 |
| Geschmackliche | 2,5 | 2,5 | 2,0 | 2,0 | 1,5 | 2,5 | 2,5 | 4,5 | 3,0 | 2,5 |
| Beurteilung | | | | | | | | | | |

| | | | | | | | | | | |
|---|---|---|---|---|---|---|---|---|---|---|
| *) Feststoffanteil 40 Gew.-% - Rest: Wasser | | | | | | | | | | |

Die Beispiele und Vergleichsbeispiele zeigen, dass die erfindungsgemäßen Zubereitungen im Dreiklang von Streichfähigkeit, Formbeständigkeit und Buttergeschmack die besten Ergebnisse aufweisen.

## Patentansprüche

1. Streichfähige Zubereitung, enthaltend
(a) 72 bis 85 Gew.-% Butter oder eine synthetische Glyceridmischung mit gleichartigem Fettsäurespektrum,
(b) 2 bis 5 Gew.-% einer niedrig schmelzenden Butterfraktion,
(c) 10 bis 26 Gew.-% einer Kräuterzubereitung
mit der Maßgabe, dass sich die Mengenangaben zu 100 Gew.-% addieren.

2. Zubereitung nach Anspruch 1, **dadurch gekennzeichnet, dass** sie 75 bis 80 Gew.-% Butter enthält.

3. Zubereitung nach den Ansprüchen 1 und/oder 2, **dadurch gekennzeichnet, dass** sie als Komponente (b) 2,5 bis 3,5 Gew.-% Butteröl enthält.

4. Zubereitung nach mindestens einem der Ansprüche 1 bis 3, **dadurch gekennzeichnet, dass** sie 18 bis 20 Gew.-% einer Kräuterzubereitung enthält.

5. Zubereitung nach mindestens einem der Ansprüche 1 bis 4, **dadurch gekennzeichnet, dass** sie als Komponente (c) fein gehackte frische Kräuter enthält.

6. Zubereitung nach mindestens einem der Ansprüche 1 bis 4, **dadurch gekennzeichnet, dass** sie als Komponente (c) eine wässrige Kräuterpaste enthält.

7. Zubereitung nach Anspruch 6, **dadurch gekennzeichnet, dass** die wässrige Kräuterpaste einen Wasseranteil von 50 bis 85 Gew.-% aufweist.

8. Zubereitungen nach mindestens einem der Ansprüche 1 bis 7, **dadurch gekennzeichnet, dass** sie weiterhin als optionale Komponente (d) Pflanzenfette und/oder Pflanzenöle enthalten.

9. Zubereitungen nach Anspruch 8, **dadurch gekennzeichnet, dass** sie die Pflanzenfette und/oder Pflanzenöle in Mengen von bis zu 5 Gew.-%

10. Zubereitungen nach den Ansprüchen 8 und/oder 9, **dadurch gekennzeichnet, dass** sie als Pflanzenfette gehärtetes Palmöl oder Kokosfett enthalten.

11. Zubereitungen nach den Ansprüchen 8 und/oder 9, **dadurch gekennzeichnet, dass** sie als Pflanzenöle Rapsöl, Sonnenblumenöl, Maiskeimöl und/oder Olivenöl enthalten.

12. Zubereitungen nach mindestens einem der Ansprüche 1 bis 11, **dadurch gekennzeichnet, dass** sie weiterhin als optionale Komponente (e) weitere Zusatzstoffe enthalten, die ausgewählt sind aus der Gruppe, die gebildet wird von Buttermilch, Aromastoffen, Salz, Gewürzen, Knoblauch, Zwiebeln, Säuerungsmitteln und Antioxidantien.

13. Zubereitungen nach mindestens einem der Ansprüche 1 bis 12, **dadurch gekennzeichnet, dass** sie
(a) 72 bis 85 Gew.-% Butter oder eine synthetische Glyceridmischung mit gleichartigem Fettsäurespektrum,
(b) 2 bis 5 Gew.-% einer niedrig schmelzenden Butterfraktion,
(c) 10 bis 26 Gew.-% einer Kräuterzubereitung sowie gegebenenfalls
(d) 0 bis 5 Gew.-% Pflanzenfette und/oder Pflanzenöle und
(e) 0 bis 2 Gew.-% weitere Zusatzstoffe,
mit der Maßgabe enthalten, dass sich die Mengenangaben zu 100 Gew.-% ergänzen.

14. Verfahren zur Herstellung von Zubereitungen nach Anspruch 1, bei dem man die Komponenten (a) und (b) in einem Rotor-Statormischer verknetet und dabei allmählich die Komponente (c) hinzugibt.

## Claims

1. Spreadable composition, containing
(a) 72 to 85% by weight of butter or a synthetic glyceride mixture having a similar fatty acid spectrum,
(b) 2 to 5% by weight of a low-melting-point butter fraction, and
(c) 10 to 26% by weight of an herb preparation,
with the proviso that the amounts indicated add up to 100% by weight.

2. Composition according to claim 1, containing 75 to 80% by weight of butter.

3. Composition according to claims 1 and/or 2, containing as component (b) 2.5 to 3.5% by weight of butter oil.

4. Composition according to at least one of claims 1 to 3, containing 18 to 20% by weight of a herb preparation.

5. Composition according to at least one of claims 1 to 4, containing as component (c) finely chopped fresh herbs.

6. Composition according to at least one of claims 1 to 4, containing as component (c) an aqueous herb paste.

7. Composition according to claim 6, wherein the water content of the aqueous herb paste is 50 to 85% by weight.

8. Compositions according to at least one of claims 1 to 7, also containing as optional component (d) vegetable fats and/or vegetable oils.

9. Compositions according to claim 8, containing the vegetable fats and/or vegetable oils in amounts of up to 5% by weight.

10. Compositions according to claims 8 and/or 9, containing as vegetable fats hardened palm oil or coconut oil.

11. Compositions according to claims 8 and/or 9, containing as vegetable oils rapeseed oil, sunflower oil, corn oil and/or olive oil.

12. Compositions according to at least one of claims 1 to 11, also containing as an optional component (e) further additives selected from the group consisting of buttermilk, flavourings, salt, spices, garlic, onions, acidifiers and antioxidants.

13. Compositions according to at least one of claims 1 to 12, containing
(a) 72 to 85% by weight of butter or a synthetic glyceride mixture having a similar fatty acid spectrum,
(b) 2 to 5% by weight of a low-melting-point butter fraction,
(c) 10 to 26% by weight of a herb preparation, and if applicable,
(d) 0 to 5% by weight of vegetable fats and/or vegetable oils, and
(e) 0 to 2% by weight of further additives,
with the proviso that the amounts indicated add up to 100% by weight.

14. Method for the production of compositions according to claim 1, wherein components (a) and (b) are kneaded in a rotor-stator mixer and component (c) is gradually added.

## Revendications

1. Composition pouvant être étalée, contenant
(a) 72 à 85% en poids de beurre ou d'un mélange synthétique de glycérides présentant un spectre similaire d'acides gras,
(b) 2 à 5% en poids d'une fraction de beurre à bas point de fusion,
(c) 10 à 26% en poids d'une composition à base d'herbes,
à condition que la somme des indications de quantités vaille 100% en poids.

2. Composition selon la revendication 1, **caractérisée en ce qu'**elle contient 75 à 80% en poids de beurre.

3. Composition selon les revendications 1 et/ou 2, **caractérisée en ce qu'**elle contient, comme composant (b), 2,5 à 3,5% en poids de graisse butyrique.

4. Composition selon au moins l'une quelconque des revendications 1 à 3, **caractérisée en ce qu'**elle contient 18 à 20% en poids d'une composition à base d'herbes.

5. Composition selon au moins l'une quelconque des revendications 1 à 4, **caractérisée en ce qu'**elle contient, comme composant (c), des herbes fraîches finement hachées.

6. Composition selon au moins l'une quelconque des revendications 1 à 4, **caractérisée en ce qu'**elle contient, comme composant (c), une pâte aqueuse d'herbes.

7. Composition selon la revendication 6, **caractérisée en ce que** la pâte aqueuse d'herbes présente une proportion d'eau de 50 à 85% en poids.

8. Compositions selon au moins l'une quelconque des revendications 1 à 7, **caractérisées en ce qu'**elles contiennent en outre, comme composant (d) facultatif, des graisses et/ou des huiles végétales.

9. Compositions selon la revendication 8, **caractérisées en ce qu'**elles contiennent les graisses et/ou les huiles végétales en des quantités de jusqu'à 5% en poids.

10. Compositions selon les revendications 8 et/ou 9, **caractérisées en ce qu'**elles contiennent, comme graisses végétales, de l'huile de palme durcie ou de l'huile de coco durcie.

11. Compositions selon les revendications 8 et/ou 9, **caractérisées en ce qu'**elles contiennent, comme huiles végétales, de l'huile de colza, de l'huile de tournesol, de l'huile de germes de maïs et/ou de l'huile d'olive.

12. Compositions selon au moins l'une quelconque des revendications 1 à 11, **caractérisées en ce qu'**elles contiennent en outre, comme composant (e) facultatif, d'autres additifs qui sont choisis dans le groupe formé par le babeurre, les substances aromatisantes, le sel, les épices, l'ail, les oignons, les acidifiants et les antioxydants.

13. Compositions selon au moins l'une quelconque des revendications 1 à 12, **caractérisées en ce qu'**elles contiennent
(a) 72 à 85% en poids de beurre ou d'un mélange synthétique de glycérides présentant un spectre similaire d'acides gras,
(b) 2 à 5% en poids d'une fraction de beurre à bas point de fusion,
(c) 10 à 26% en poids d'une composition à base d'herbes ainsi que, le cas échéant,
(d) 0 à 5% en poids de graisses et/ou d'huiles végétales et
(e) 0 à 2% en poids d'autres additifs,
à condition que la somme des indications de quantités vaille 100% en poids.

14. Procédé pour la préparation de compositions selon la revendication 1, dans lequel on malaxe les composants (a) et (b) dans un mélangeur à rotor-stator tout en y ajoutant graduellement le composant (c).
